**Europäisches Patentamt**

**European Patent Office**

**Office européen des brevets**

(19)

(11) Veröffentlichungsnummer: **0 162 430**

**A2**

(12) # EUROPÄISCHE PATENTANMELDUNG

(21) Anmeldenummer: 85106139.0

(22) Anmeldetag: 18.05.85

(51) Int. Cl.⁴: **G 05 B 19/42**

(30) Priorität: 24.05.84 DE 3419404

(43) Veröffentlichungstag der Anmeldung:
27.11.85 Patentblatt 85/48

(84) Benannte Vertragsstaaten:
AT CH DE FR GB IT LI

(71) Anmelder: GVT Gesellschaft für Verfahrenstechnik der
garnverarbeitenden Industrie mbH
Amtsstrasse 4
D-6700 Ludwigshafen(DE)

(72) Erfinder: Overlach, Knud, Dr.
Ernst-Barlach-Ring 11
D-7505 Ettlingen 6(DE)

(72) Erfinder: Senger, Detlef, Dr.
Schlosserweg 8
D-7505 Ettlingen 5(DE)

(72) Erfinder: Wössner, Martina
Scheffelstrasse 1
D-7500 Karlsruhe(DE)

(72) Erfinder: Männel, Friedrich
Neuenwegstrasse 8
D-7527 Kraichtal 3(DE)

(74) Vertreter: Moser, Herbert, Dr.-Ing.
Nowackanlage 15
D-7500 Karlsruhe(DE)

(54) Verfahren zur Steuerung eines Stickautomaten.

(57) Ein Verfahren zur digitalen Steuerung eines Stickautomaten soll hinsichtlich der automatischen Auswahl der nach der Motivvorlage zu wählenden Stickart verbessert werden. Hierzu ist vorgesehen,

a) daß das wiederzugebende Bild durch Abtasten der im Bildspeicher gespeicherten Bildpunkte auf in ihrer Richtung frei wählbaren parallelen Abtastlinien in Teilflächen zerlegt wird,

b) daß eine Teilfläche dadurch bestimmt wird, daß bei benachbarten Bildpunktfolgen jeweils zwei Begrenzungspunkte gefunden werden,

c) daß die so ermittelten Teilflächen in einem weiteren Speicher gespeichert werden,

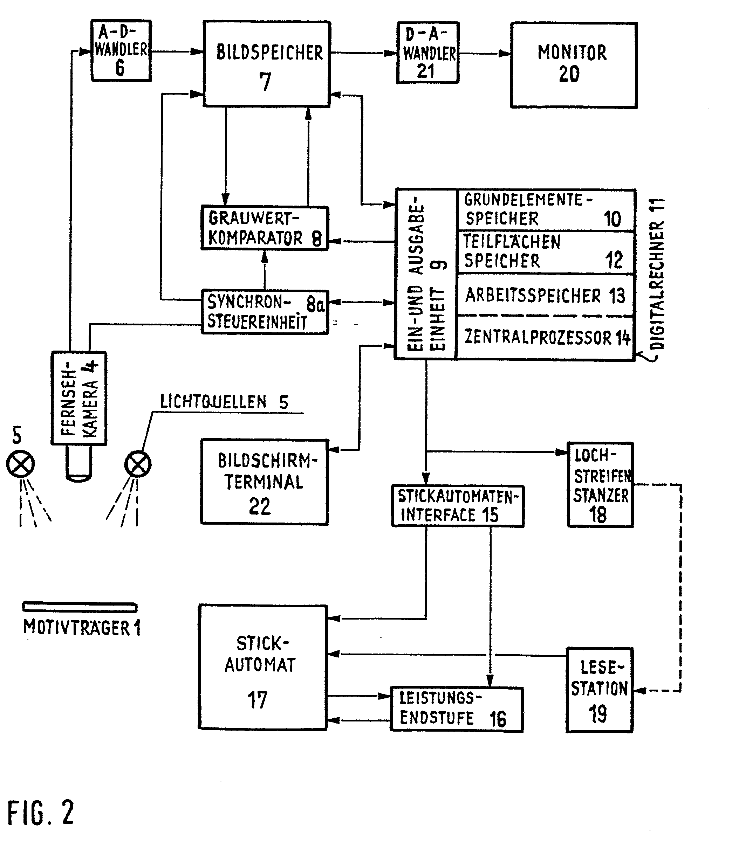

d) daß die Abstände zwischen allen Teilflächen durch den Digitalrechner ermittelt werden,

e) daß über den Nullabstand aneinandergrenzender Kanten von Teilflächen zusammenhängende Figuren gebildet werden,

f) daß dur Festlegung der Reihenfolge der Bearbeitung durch den Digitalrechner die kürzesten Abstände zwischen den so ermittelten Figuren bestimmt werden,

g) und daß nach Vorgabe der auszuführenden Stickart und Stichrichtung die Teilflächen der Figuren in der festgelegten Reihenfolge durch das Umsetzprogramm abgearbeitet werden (Abb.2).

FIG. 2

Anmelder: GVT
Gesellschaft für Verfahrenstechnik der
garnverarbeitenden Industrie mbH
Ludwigshafen/BRD

Verfahren zur Steuerung eines Stickautomaten

Die Erfindung betrifft ein Verfahren zur Steuerung eines Stickautomaten, insbesondere zur Herstellung von Etiketten und Abzeichen, bei dem die Bildpunkte von einem Motivträger zeilenweise abgetastet werden, und jeder Bildpunkt, der einen Grauwert beliebiger Intensität darstellt, mit einer einstellbaren Grauwertschwelle verglichen, als oberhalb oder unterhalb der Grauwertschwelle liegend klassifiziert, binär umgesetzt, und in einen digitalen Bildspeicher gespeichert wird, und daß die Werte aus dem digitalen Bildspeicher einem Digitalrechner zugeführt werden, welcher unter Benutzung von gespeicherten Umsetzprogrammen für Sticktechniken den Stickautomaten steuert. Anstelle der Grauwertschwelle kann das Verfahren auch unter Benutzung eines Grauwertfensters durchgeführt werden.

- 2 -                    0162430

Ein Verfahren und eine Vorrichtung der eingangs genannten Art sind in der DE- 31 38 364 A1 vorbeschrieben. Bei dieser vorbekannten Steuereinrichtung für
einen Stickautomaten werden die Bildpunkte des in
Grauwerte umgesetzten Motivs durch eine Fernsehkamera zeilenweise abgetastet, wobei bei farbigen Motiven für jede Farbe ein farbspezifisches Bild mit abtastbaren Grauwerten aufgezeichnet wird. Jeder in einen Grauwert umgesetzte Bildpunkt einer Zeile wird mit
einer eingestellten Grauwertschwelle verglichen. Durch
diesen Vergleich, bei dem die Entscheidung "heller"
oder "dunkler" als die Grauwertschwelle, d.h. oberhalb oder unterhalb der Grauwertschwelle liegend, getroffen wird, ergeben sich binäre Werte, die eine binäre Speicherung des Motivträgers in einem Bildspeicher
erlauben.

Statt die jeweils in einen Grauwert umgesetzten Bildpunkte mit einer Grauwertschwelle zu vergleichen, kann
gegebenenfalls auch ein einstellbares Grauwertfenster
verwendet werden. Dabei wird der Bildpunkt als innerhalb oder außerhalb des Grauwertfensters liegend klassifiziert und dabei in einen binären Zahlenwert umgesetzt.
Eine derartige Umsetzung unter Verwendung eines Grauwertfensters ist in der EP-A 0 075 801 beschrieben.

Die binären Werte werden dann einem Digitalrechner zugeführt, in dem Umsetzprogramme für Sticktechniken gespeichert sind. Diese umfassen verschiedene bekannte und in jedem Stickmuster wiederkehrende geometrischen
Bildformen, wie Linien oder Flächen, und das in binäre Werte umgesetzte Motiv wird abschnittsweise aus
den gespeicherten Bildformen als Grundelemente zusammengesetzt. Das vom Digitalrechner auf diese Weise erstellte Stickprogramm steuert dann direkt oder
indirekt die Koordinatenverschiebung eines Stickrahmens in einem oder mehreren parallel arbeitenden
Stickautomaten.

Mit Hilfe einer solchen Steuereinrichtung können verschiedene Motivvorlagen, vorzugsweise Etiketten und
Abzeichen, automatisch und ohne Handführung eines Abtastelementes von einer Motivvorlage abgenommen und
anschließend zur direkten Steuerung eines bzw. einer
Mehrzahl von parallel arbeitenden Stickautomaten verwendet werden.

Besondere Schwierigkeiten ergeben sich jedoch dann,
wenn zusammenhängende Figuren ausgestickt werden sollen.

Die Erfindung geht von der Aufgabenstellung aus, ein
Verfahren zur Steuerung eines Stickautomaten anzugeben, mit dem das selbsttätige Aussticken kompliziert
zusammengesetzter und in ihren Abmessungen stark wechselnder Bildbestandteile im wesentlichen automatisch
und ohne Vorgabe der Stickart und Stichrichtung durch
einen besonders geschulten Bearbeiter möglich ist.

Zur Lösung dieser Aufgabenstellung ist vorgesehen:

a) daß das wiederzugebende Bild durch Abtasten der im Bildspeicher gespeicherten Bildpunkte auf in ihrer Richtung frei gewählten parallelen Abtastlinien in Teilflächen zerlegt wird,

b) daß eine Teilfläche dadurch bestimmt wird, daß bei benachbarten Bildpunktfolgen jeweils zwei Begrenzungspunkte gefunden werden,

c) daß die so ermittelten Teilflächen in einem weiteren Speicher (Teilflächenspeicher) gespeichert werden,

d) daß die Abstände zwischen allen Teilflächen durch den Digitalrechner ermittelt werden,

e) daß über den Nullabstand aneinandergrenzender Kanten von Teilflächen zusammenhängende Figuren gebildet werden,

f) daß zur Festlegung der Reihenfolge der Bearbeitung durch den Digitalrechner die kürzesten Abstände zwischen den so ermittelten Figuren bestimmt werden,

g) und daß nach Vorgabe der auszuführenden Stickart und Stichrichtung die Teilflächen der Figuren in der festgelegten Reihenfolge durch das Umsetzprogramm abgearbeitet werden.

Das Grundprinzip des Verfahrens besteht in einer Segmentierung der kompliziert aufgebauten Bildbestandteile derart, daß geschlossene Teilflächen entstehen, wobei aus diesen geschlossenen einfach zusammenhängenden Teilflächen die Figuren zusammengesetzt und durch das Umsetzprogramm abgearbeitet werden können. Zur Bestimmung der Teilflächen werden die im Bildspeicher abgespeicherten Binärwerte längs frei wählbarer paralleler Abtastlinien, die vorzugsweise im Abstand eines Bildpunktes liegen, abgetastet. Obwohl die Richtung der Abtastlinien an sich frei wählbar ist, erscheint es im allgemeinen zweckmäßig, die Abtastlinien parallel zu den Abtastlinien der ursprünglichen zeilenweisen Abnahme der Bildpunkte zu legen, und auf diese Weise die Teilflächen zu ermitteln.

Zur automatischen Auswahl der Stickart kann zweckmäßig vorgesehen sein, daß zur Abarbeitung von Figuren allgemeiner Art die Stickart Steppstich selbsttätig gewählt wird. Unter Figuren allgemeiner Art sollen solche Figuren verstanden werden, die trotz flächenhafter Ausdehnung in allen Richtungen keine Vorzugsrichtung aufweisen, z.B. kreisförmige Figuren.

Bei Figuren mit feststellbarer Vorzugsrichtung erscheint es zweckmäßig, zunächst diese Vorzugsrichtung durch schrittweises Wegnehmen der Randkonturpunkte zu ermitteln, und dann die Figuren in Blattstich senkrecht zur ermittelten Mittellinie auszusticken, sofern die Spannweite des Blattstichs unterhalb eines vorgegebenen Wertes liegt. Bei größeren Spannweiten, beispielsweise oberhalb von 5 mm kann ein automatischer Übergang auf Steppstich vorgesehen sein.

Bei linienartigen Figuren, deren Randkonturpunkte weniger als vier Bildpunkte auseinanderliegen, erscheint es vorteilhaft, die Figur durch Steppstich in Linienrichtung abzuarbeiten. Die Linienrichtung läßt sich wie im Vorangegangenen angegeben, ebenfalls durch Wegnehmen der Randpunkte ermitteln.

Schließlich kann es zweckmäßig sein, daß bei Figuren, die neben anderen Bildbestandteilen auch Bildkomponenten enthalten, bei denen der Abstand der Randkonturpunkte weniger als vier Bildpunkte beträgt, durch den Digitalrechner selbsttätig die Stickart Steppstich in Linienrichtung festgelegt wird.

Durch die Merkmale der Erfindung wird eine, gegebenenfalls vollautomatische Umsetzung einer Motivvorlage mit komplizierten Bildbestandteilen erreicht, wobei nach objektiven Kriterien eine Festlegung der Stickart selbsttätig erfolgt. Die Stickrichtung kann wie die Abtastrichtung in einer Grundeinstellung beliebig vorgegeben oder ebenfalls selbsttätig festgelegt werden.

In der Zeichnung ist ein Ausführungsbeispiel zur Erläuterung des Verfahrens schematisch dargestellt; es zeigen:

Abb. 1    einen Motivträger mit zwei Figuren,
Abb. 2    ein Blockschaltbild einer Vorrichtung zur Durchführung des Verfahrens

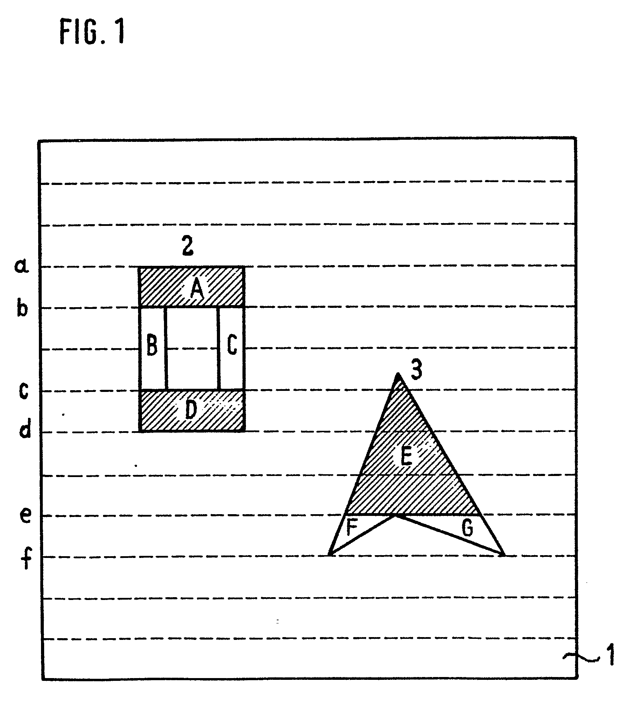

In Abb. 1 sind auf einem Motivträger 1 zwei Figuren 2,3 vorgegeben. Figur 2 stellt dabei eine Rechteckfläche mit Mittelaussparung und Figur 3 eine pfeilspitzenartige geschlossene Fläche dar.

Durch zeilenweises Abtasten und Vergleich jedes Bildpunktes mit einer einstellbaren Grauwertschwelle oder einem Grauwertfenster wird zunächst im digitalen Bildspeicher ein binäres Speicherbild der Fig.2 und 3 abgespeichert.

Diese abgespeicherten Figuren werden dann durch Abtasten des Speicherinhaltes auf parallelen Abtastlinien a,b,c,d,e,f in einfache Teilflächen zerlegt. Das Kriterium, nach dem eine solche Teilfläche bestimmt wird, liegt darin, daß eine Teilfläche stets dann vorliegt, wenn die Begrenzungspunkte einer Bildpunktreihe festgestellt werden, und wenn sich an diese Bildpunktreihe weitere Bildpunktreihen anschließen, die ebenfalls nur zwei Begrenzungspunkte aufweisen.

Die Abtastung beginnt am oberen Rand des Motivträgers 1. Bei der Abtastlinie a wird erstmals eine Bildpunktfolge mit nur zwei Begrenzungspunkten aufgefunden. Diese Abtastung setzt sich für die Teilfläche A aus parallelen Abtastlinien bis zur Abtastlinie b fort. Unterhalb von b bis zur Abtastlinie c sind jeweils vier Begrenzungspunkte feststellbar, d.h. da einer Abtastlinie auf einer Teilfläche nur zwei Begrenzungspunkte zugeordnet sein dürfen, daß es sich um zwei hintereinanderliegende Teilflächen B,C, handelt. Bei der Abtastlinie c werden für die Figur 2 wiederum nur zwei Begrenzungspunkte der Teilfläche D festgestellt, jedoch treten zusätzlich die beiden Begrenzungspunkte der oberen Teilfläche E der Figur 3 auf.

Auf der Abtastlinie d sind für die Teilfläche D ebenfalls nur zwei Begrenzungspunkte vorhanden, die nachfolgende Bildpunktfolge mit ebenfalls zwei Begrenzungspunkten gehört zu der Teilfläche E von Figur 3.

Auf der Abtastlinie e werden für die Teilfläche E ebenfalls nur zwei Begrenzungspunkte gefunden. Auf der unmittelbar darunterliegenden Abtastlinie ergeben sich jedoch wiederum vier Begrenzungspunkte, d.h. es treten neue Teilflächen F und G hinzu, die sich bis zur Abtastlinie f erstrecken.

Der beschriebene Abtastvorgang geht davon aus, daß die Figuren 2 und 3 gleichfarbig auszuführen sind. Sind beispielsweise in Fig. 2 die Teilflächen B und C rot, ebenso wie die Teilfläche E der Figur 3 auszuführen, während die Teilflächen A und B sowie die Teilflächen F und G eine grüne Farbe aufweisen sollen, müßten zwei farbspezifische Motivvorlagen gegenständlich oder durch entsprechende Ausblendung der nicht gewünschten Farbanteile durch Filter oder farbgebende Beleuchtung geschaffen werden.

Das erste farbspezifische Bild umfaßt dann nur die Teilflächen A,D und E, die in roter Farbe auszusticken sind, während das zweite farbspezifische Bild die grünen Teilflächen B,C,F und G enthält.

Abb. 2 zeigt die schematische Gesamtanordnung. Vor einer Fernsehkamera 4 befindet sich in entsprechender Aufnahmeentfernung der Motivträger 1, auf dem das in Figur 1 dargestellte Motiv mit seinen Figurenbestandteilen bzw. die farbspezifischen Motivträger aufliegen. Diese werden durch Lichtquellen 5 gleichmäßig ausgeleuchtet.

Die Fernsehkamera entspricht einer bekannten Ausführung. Das von der Fernsehkamera erzeugte Ladungsbild wird von einem A-D-Wandler 6 gewandelt und in einem Bildspeicher 7 abgelegt. Aus dem Graubild wird unter Vergleich mit einer eingestellten Grauwertschwelle in einem Grauwertkomparator 8 ein Binärbild erzeugt, das wieder in dem Bildspeicher 7 abgelegt wird. Der Bildspeicher 7 steht mit der Ein- und Ausgabeeinheit 9 eines Digitalrechners 11 in Verbindung. Zur Steuerung der Abtastung dient eine Synchronsteuereinheit 8a, die die Kamera 4, den Grauwertkomparator 8 und den Bildspeicher 7 mit der Ein- und Ausgabeeinheit 9 des Digitalrechners 11 verbindet. Dem einen Arbeitsspeicher 13 und einen Zentralprozessor 14 enthaltenden Digitalrechner 11 ist ein Grundelementespeicher 10 sowie ein Teilflächenspeicher 12 zugeordnet. Der Ausgang des Digitalrechners 11 liegt über ein Stickautomaten-Interface 15 an einer Leistungsendstufe 16 für den Antrieb der die Rahmenverstellung hervorrufenden Schrittmotoren eines Stickautomaten 17.

An den Digitalrechner 11 kann alternativ zu dem Interface 15 auch ein Lochstreifenstanzer 18 angeschlossen werden, an den der Stickcode übertragen wird und von dem ein Lochstreifen erstellt wird. Der Lochstreifen dient dann der Steuerung des oder der Stickautomaten.

Der Lochstreifen wird dazu nach Abschluß des Stanzvorganges in die Lesestation 19 des Stickautomaten 17 eingelegt und steuert dann den Stickautomaten 17.

Das vom Digitalrechner 11 vorgegebene Stickmuster wird an einem Monitor 20 mit vorgeschaltetem D-A-Wandler 21 überwacht und kann ggf. durch Wegnahme oder Einfügen von Bildpunkten korrigiert werden. Die Korrektur erfolgt über das am Digitalrechner 11 angeschlossene Bildschirmterminal 22 oder andere Ein-/Ausgabe-Einrichtungen, wie z.B. Lichtgriffel oder Rollkugel.

A 943

Patentansprüche

1. Verfahren zur Steuerung eines Stickautomaten, insbesondere zur Herstellung von Etiketten und Abzeichen, bei dem die Bildpunkte von einem Motivträger zeilenweise abgetastet werden, und jeder Bildpunkt, der einen Grauwert beliebiger Intensität darstellt, mit einer einstellbaren Grauwertschwelle verglichen, als oberhalb oder unterhalb der Grauwertschwelle liegend klassifiziert, binär umgesetzt, und in einem digitalen Bildspeicher gespeichert wird, und daß die Werte aus dem digitalen Bildspeicher einem Digitalrechner zugeführt werden, welcher unter Benutzung von gespeicherten Umsetzprogrammen für Sticktechniken den Stickautomaten steuert, d a d u r c h  g e k e n n z e i c h n e t, daß

a) das wiederzugebende Bild durch Abtasten der im Bildspeicher gespeicherten Bildpunkte auf in ihrer Richtung frei wählbaren parallelen Abtastlinien in Teilflächen zerlegt wird,

b) eine Teilfläche dadurch bestimmt wird, daß bei benachbarten Bildpunktfolgen jeweils zwei Begrenzungspunkte gefunden werden,

c) die so ermittelten Teilflächen in einem weiteren Speicher gespeichert werden,

d) die Abstände zwischen allen Teilflächen durch den Digitalrechner ermittelt werden,

e) über den Nullabstand aneinandergrenzender Kanten von Teilflächen zusammenhängende Figuren gebildet werden,

f) zur Festlegung der Reihenfolge der Bearbeitung durch den Digitalrechner die kürzesten Abstände zwischen den so ermittelten Figuren bestimmt werden,

g) und daß nach Vorgabe der auszuführenden Stickart und Stichrichtung die Teilflächen der Figuren in der festgelegten Reihenfolge durch das Umsetzprogramm abgearbeitet werden.

2. Verfahren zur Steuerung eines Stickautomaten, insbesondere zur Herstellung von Etiketten und Abzeichen, bei dem die Bildpunkte von einem Motivträger zeilenweise abgetastet werden, und daß jeder Bildpunkt, der einen Grauwert beliebiger Intensität darstellt, mit einem einstellbaren Grauwertfenster abgetastet, als innerhalb oder außerhalb des Grauwertfensters liegend klassifiziert, binär umgesetzt, und in einem digitalen Bildspeicher gespeichert wird, und daß die Werte aus dem digitalen Bildspeicher einem Digitalrechner zugeführt werden,
welcher unter Benutzung von gespeicherten Umsetzprogrammen für Sticktechniken den Stickautomaten
steuert, d a d u r c h    g e k e n n z e i c h -
n e t, daß

a) das wiederzugebende Bild durch Abtasten
   der im Bildspeicher gespeicherten Bildpunkte
   auf in ihrer Richtung frei wählbaren parallelen
   Abtastlinien in Teilflächen zerlegt wird,

b) eine Teilfläche dadurch bestimmt wird, daß bei
   benachbarten Bildpunktfolgen jeweils zwei Begrenzungspunkte gefunden werden,

c) die so ermittelten Teilflächen in einem weiteren Speicher gespeichert werden,

d) die Abstände zwischen allen Teilflächen durch
   den Digitalrechner ermittelt werden,

e) über den Nullabstand aneinandergrenzender Kanten von Teilflächen zusammenhängende Figuren
   gebildet werden,

f) zur Festlegung der Reihenfolge der Bearbeitung
   durch den Digitalrechner die kürzesten Abstände
   zwischen den so ermittelten Figuren bestimmt
   werden,

g) und daß nach Vorgabe der auszuführenden Stickart und Stichrichtung die Teilflächen der Figuren in der festgelegten Reihenfolge durch
   das Umsetzprogramm abgearbeitet werden.

3. Verfahren nach Anspruch 1 oder 2, d a d u r c h
g e k e n n z e i c h n e t, daß zur Abarbeitung
von Figuren allgemeiner Form die Stickart Steppstich selbsttätig gewählt wird.

4. Verfahren nach Anspruch 1 oder 2, d a d u r c h
g e k e n n z e i c h n e t, daß bei Figuren mit
feststellbarer Vorzugsrichtung diese Vorzugsrichtung durch schrittweises Wegnehmen der Randpunkte
ermittelt und die Figuren in Blattstich senkrecht
zur ermittelten Mittellinie gestickt werden, sofern die Spannweite des Blattstichs unterhalb eines vorgegebenen Wertes liegt.

5. Verfahren nach Anspruch 1 oder 2, d a d u r c h
g e k e n n z e i c h n e t, daß bei linienartigen
Figuren, deren Randkonturpunkte weniger als vier
Bildpunkte auseinanderliegen, die Figur durch Steppstich in Linienrichtung abgearbeitet wird.

6. Verfahren nach Anspruch 1 oder 2, d a d u r c h
g e k e n n z e i c h n e t, daß bei Figuren, die
neben anderen Bildbestandteilen auch Bildkomponenten enthalten, bei denen der Abstand der Randkonturpunkte weniger als vier Bildpunkte beträgt, durch
den Digitalrechner selbsttätig die Stickart Steppstich in Linienrichtung festgelegt wird.

FIG. 1

0162430

2/2

FIG. 2